# EUROPEAN PATENT APPLICATION

(11) **EP 2 657 833 A2**
(43) Date of publication of application: **30.10.2013**
(21) Application number: 13153615.3
(22) Date of filing: 01.02.2013
(51) Int. Cl.: G06F 3/06

(54) **File processing apparatus and file processing method**

(30) Priority: 26.04.2012 JP 2012101760
(71) Applicant: Kabushiki Kaisha Toshiba, Tokyo 105-8001 (JP)
(72) Inventor: Suzuki, Kenichiro, Tokyo 105-8001 (JP); Fukushima, Atsushi, Tokyo 105-8001 (JP); Inoue, Masaaki, Tokyo 105-8001 (JP)
(74) Representative: Henkel, Breuer & Partner

(57) **Abstract**

According to at least one embodiment, a file processing apparatus includes a determination module (32), and a recording controller (31). The determination module is configured to determine relevancies of a plurality of files. The recording controller is configured to issue an instruction to record a first file of the first file and a second file having predetermined relevancies in a first area of a first storage of a storage unit configured to simultaneously read data from corresponding locations of a plurality of storages, to record the second file in a second area of a second storage at a location corresponding to the first area, and to record remaining files in free areas of the plurality of storages.

## Description

Embodiments described herein relate generally to a file processing apparatus and file processing method.

In recent years, various file management techniques have been proposed. For example, a technique called mirroring, which "saves an identical file on a plurality of storage media", has been proposed.

A general architecture that implements the various features of the embodiments will now be described with reference to the drawings. The drawings and the associated descriptions are provided to illustrate the embodiments and not to limit the scope of the invention.
FIG. 1 is a schematic block diagram showing the arrangement of a file processing apparatus according to the first and second embodiments;
FIG. 2 is a view showing an allocation (recording) example of deeply related files at corresponding locations in respective storages;
FIG. 3 is a view showing a file allocation example on respective storages by a RAID system;
FIG. 4 is a view showing a file allocation example on respective storages without dividing files;
FIG. 5 is a view showing an example of processing target files;
FIG. 6 is a view showing an example in the middle of generation of a recording image;
FIG. 7 is a view showing an example of data read operations from corresponding locations (an area of a processing target file) in respective storages;
FIG. 8 is a view showing an example of data read operations from corresponding locations (area of size 2/a + area of target file + area of size 2/a) in respective storages;
FIG. 9 is a view showing an example of data read operations from corresponding locations (area of target file + area of size a) in respective storages; and
FIG. 10 is a view showing an example of data read operations from corresponding locations (area of target file + area of size a) in respective storages.

Various embodiments will be described hereinafter with reference to the accompanying drawings.

In general, according to one embodiment, a file processing apparatus includes a determination module, and a recording controller. The determination module is configured to determine relevancies of a plurality of files. The recording controller is configured to issue an instruction to record a first file of the first file and a second file having predetermined relevancies in a first area of a first storage of a storage unit configured to simultaneously read data from corresponding locations of a plurality of storages, to record the second file in a second area of a second storage at a location corresponding to the first area, and to record remaining files in free areas of the plurality of storages.

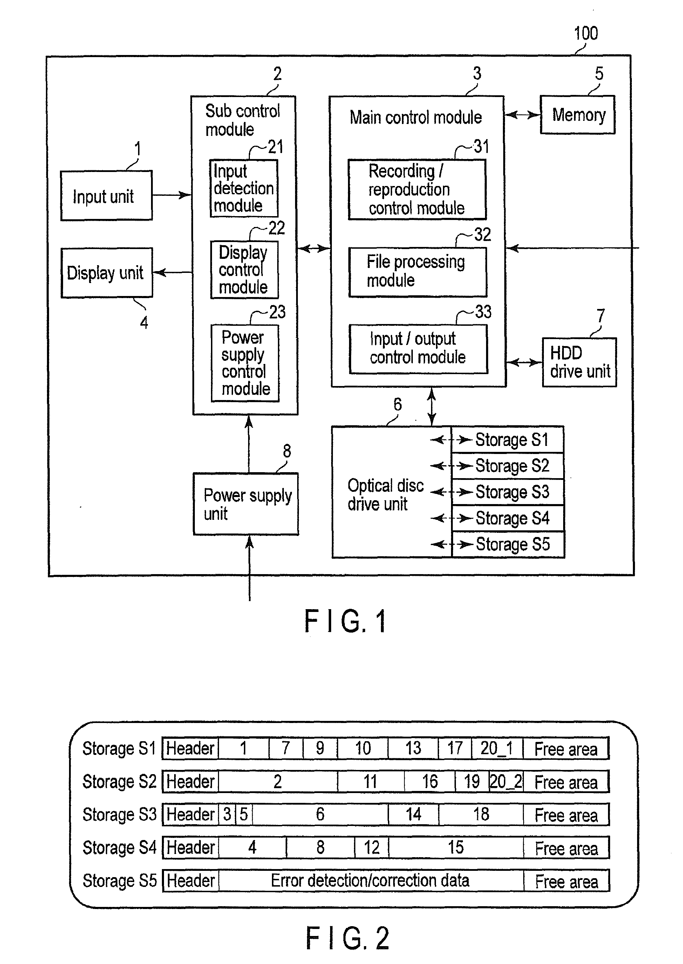

FIG. 1 is a schematic block diagram showing the arrangement of a file processing apparatus according to an embodiment. A file processing apparatus 100 (optical disc drive unit 6) can parallelly (simultaneously) record a plurality of files in a plurality of data storage media (a plurality of storage media), and can parallelly (simultaneously) read a plurality of files from the plurality of data storage media. For example, the optical disc drive unit 6 stores the plurality of data storage media, which are stacked to oppose each other, can parallelly record data at corresponding locations of these plurality of data storage media, and can parallelly read data from the corresponding locations of these plurality of data storage media. When each data storage medium has a disc shape, the corresponding locations of the plurality of data storage media are those having the same radial distance. The optical disc drive unit 6 includes a plurality of optical heads in correspondence with the plurality of data storage media, and these plurality of optical heads are configured to be integrally movable in the radial direction of the data storage medium (disc/disk). Thus, as described above, these plurality of optical heads can parallelly record data at the corresponding locations on the plurality of data storage media, and can parallelly read data from the corresponding locations of these plurality of data storage media.

As the data storage medium, various media such as an optical disc, magnetic disk, and flash memory can be applied. This embodiment will mainly explain a case in which an optical disc is applied as the data storage medium, but the embodiment is not limited to the processing of the optical disc.

As shown in FIG. 1, the file processing apparatus 100 includes an input unit 1, sub control module 2, main control module 3, display unit 4, memory 5, optical disc drive unit 6, hard disk drive (HDD) unit 7, and power supply unit 8.

The sub control module 2 includes an input detection module 21, display control module 22, and power supply control module 23. The main control module 3 includes a recording/reproduction processing module 31, file processing module 32, and input/output control module 33. The main control module 3 transmits display data to be displayed by the display unit 4 to the display control module 22. The display control module 22 controls the display unit 4 based on the display data. Then, the display unit 4 can display display data corresponding to the display data.

For example, the input unit 1 includes a power key, record key, play key, and the like. The user can control the operation of the file processing apparatus 100 by input operations to the input unit 1.

The power key is used to issue a power on/off instruction of the file processing apparatus 100. Upon pressing of the power key, the pressing operation of the power key is detected by the input/output detection module 21 of the sub control module 2, and the power supply control module 23 of the sub control module 2 notifies the power supply unit 8 of a power on/off instruction. The power supply unit 8 turns on a power supply in a power-off state, and turns off the power supply in a power-on state.

The optical disc drive unit 6 includes, for example, a plurality of optical disc drives (a plurality of optical heads), can record data on one or a plurality of optical discs (storages S1 to S5), and can read data recorded on the one or plurality of optical discs. The plurality of optical heads are configured to be integrally movable in the radial direction of a data storage medium (disc/disk).

The input/output control module 33 receives one or a plurality of externally provided files, and outputs them to, for example, the HDD unit drive unit 7. Thus, the HDD drive unit 7 can record the one or plurality of externally provided files on a hard disk. The input/output control module 33 can receive one or a plurality of externally provided files, and can output them to the optical disc drive unit 6. Thus, the optical disc drive unit 6 can record the one or plurality of externally provided files on one or a plurality of storages.

Furthermore, the input/output control module 33 can receive one or a plurality of files recorded on the hard disk, and can output them to the optical disc drive unit 6. Thus, the optical disc drive unit 6 can record the one or plurality of files recorded on the hard disk on one or a plurality of storages. Moreover, the input/output control module 33 can receive one or a plurality of files recorded on the plurality of storages of the optical disc drive unit 6, and can output them to the HDD drive unit 7. Thus, the optical disc drive unit 6 can record the one or plurality of files recorded on the plurality of storages on the hard disk.

Recording processing based on relevancies of a plurality of files and the like will be described below.

As described above, the file processing apparatus 100 shown in FIG. 1 can parallelly record and reproduce a plurality of files together on and from the plurality of storages.

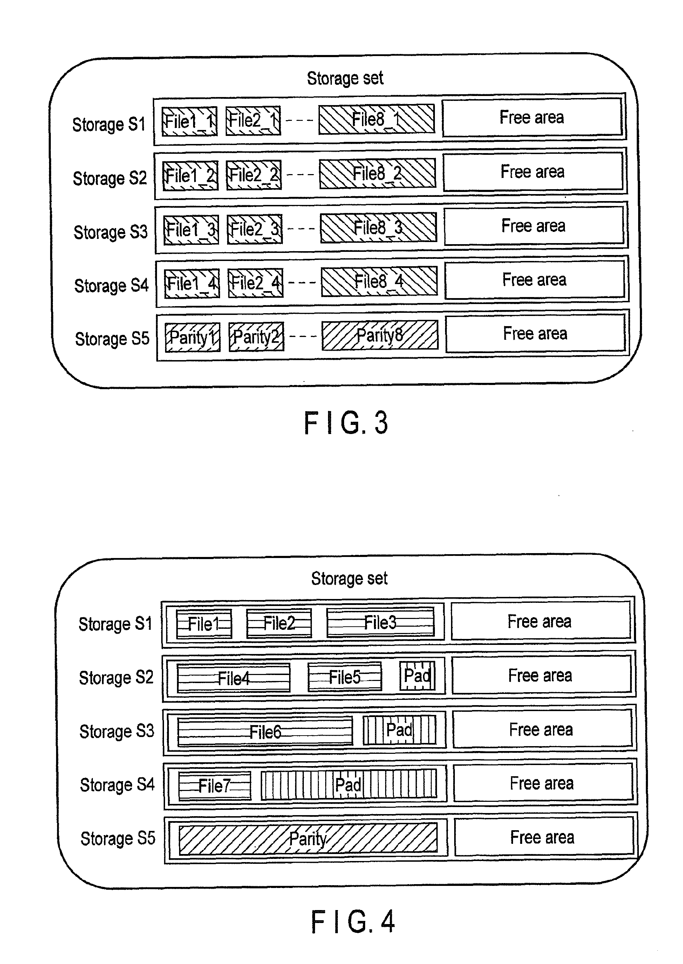

For example, a RAID system processes data, as shown in FIG. 3. This RAID system adopts a method of equally dividing a plurality of files to generate a plurality of divided files, generating parity data of these divided files, and distributing and recording these divided files and parity data on a plurality of storages. In this case, in order to reproduce a divided file recorded on one storage, divided files and parity data recorded on the remaining storages have to be read. That is, a file cannot be reproduced from one storage. When storages are damaged or lost due to occurrence of a disaster, it is demanded to restore files as many as possible from surviving storages. Especially, in a technical field of an archive apparatus using optical discs, the above demand is strong. It is not easy for the recording method shown in FIG. 3 to satisfy the above demand.

For example, a recording method of recording data without dividing data, as shown in FIG. 4, may be used. According to this recording method, the above demand can be satisfied. Parallel recording processing using a plurality of apparatuses adopts a method of using a uniform data size to be recorded by the plurality of apparatuses so as to eliminate outer and inner recording/reproduction speed differences. However, in this case, in the recording method shown in FIG. 4, many extra areas ("pad" shown in FIG. 4) to be appended before and after data have to be prepared, thus wasting the recording capacity.

For example, when file 7 is to be reproduced in FIG. 4, data in storages other than a storage S4 which stores file 7 are used in only parity check, resulting in large wastes.

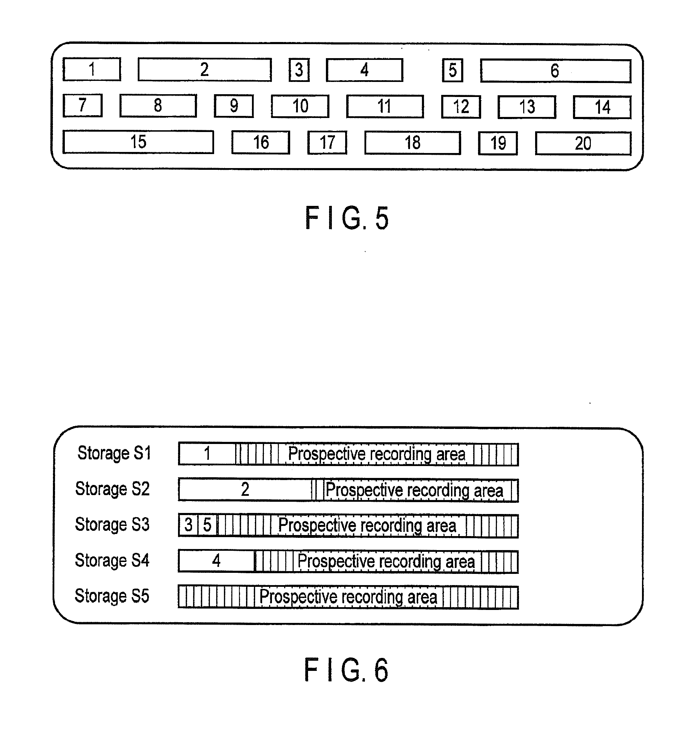

According to recording processing based on the relevancies of a plurality of files, which will be described with reference to FIGS. 5, 6, 7, 8, 9, and 10, files can be efficiently and effectively recorded.

FIG. 5 is a view showing an example of a plurality of files to be recorded. As shown in FIG. 5, assume that files 1 to 20 are recording target files. A width of each file shown in FIG. 5 represents a rough file size, and file numbers represent a result when files are sorted so that deeply related files (having high relevancies) are stored at neighboring locations as much as possible.

The depths of relations (heights of relevancies) are determined by the file processing module 32. For example, the depths of relations are determined based on a sorting result based on various conditions by the user or the file processing module 32. For example, the depths of relations among files can be determined with reference to files in identical folders or last update dates, creation dates, file names, extensions, update frequencies, file sizes, and the like of files in identical folders. Files in a single folder are deeply related. Files having close last update dates are deeply related. Files having close creation dates are deeply related. Files having the same portion of file names are deeply related. Files having the same file extensions are deeply related. Files having high update frequencies are deeply related. Files having similar file sizes are deeply related.

As shown in FIG. 2, deeply related files are allocated in parallel in the plurality of (four in this example) storages, and error detection/correction data such as parity data are recorded in one storage. That is, the file processing apparatus 100 (recording/reproduction control module 31) issues an instruction to allocate (record) deeply related files at corresponding locations of the plurality of storages. In response to this instruction, the optical disc drive unit 6 allocates (records) deeply related files at corresponding locations of the plurality of storages.

In such file allocation, a total size of a plurality of target files is calculated, and is divided into four each as a recording size for one storage. Then, files are arranged in an order of files 1, 2, 3, 4, 5, ... in turn from a storage having a larger free space (FIG. 6). If a file larger than the free space is found, that file is divided and recorded like file 20 in FIG. 2. After allocation (recording) of files, "error detection/correction data" such as parity data and hash data, which allow detection and correction of an error which has occurred in any of file images, are generated from all file images, and are allocated as data for a storage S5. Finally, file data associated with target files, and data such as parity data and hash data, which allow detection and correction of an error which has occurred in the corresponding storage stored data and the error detection/correction data, are generated, are allocated as file headers, and are recorded on the respective storages (FIG. 2).

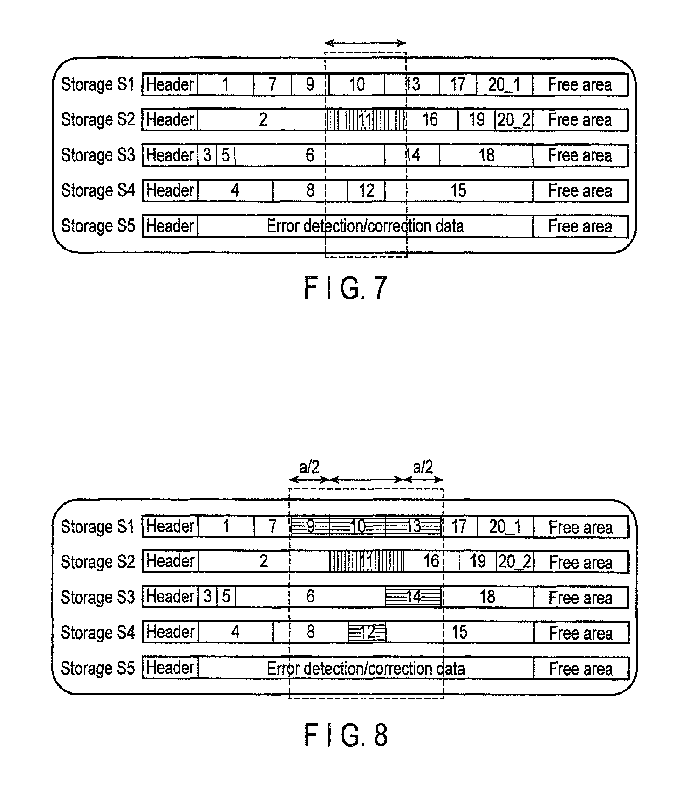

As for data recorded in this way, when, for example, file 11 is to be reproduced, data for a size of file 11 is read from all storages, as shown in FIG. 7. However, data other than file 11 are used in only error detection such as parity data.

In this embodiment, in order to cut that waste, upon reproducing file 11, the recording/reproduction control module 31 issues an instruction to read data for an area corresponding to file 11. In response to this instruction, the optical disc drive unit 6 reads data for the area corresponding to file 11 from the respective storages. The recording/reproduction control module 31 receives data for the size of file 11 from all the storages, and effectively uses usable data other than file 11, as shown in FIG. 7. That is, the recording/reproduction control module 31 reproduces file 11 included in the data read from the area corresponding to file 11 in storage S2. Also, the recording/reproduction control module 31 reproduces other complete files included in the data read from the area corresponding to file 11 in the storages other than storage S2, and expands and stores them in a cache or the like.

Alternatively, upon reproducing file 11, the recording/reproduction control module 31 issues an instruction to read data for the area corresponding to file 11 and an area of a size a. In response to this instruction, the optical disc drive unit 6 reads data for the area corresponding to file 11 and the area of size a from the respective storages. For example, assume that size a has a small influence of a processing performance drop. The recording/reproduction control module 31 reproduces file 11 included in data read from the area corresponding to file 11 and that of size a. Also, the recording/reproduction control module 31 reproduces other complete files included in data read from the area corresponding to file 11 and that of size a, and expands and stores them on a cache or the like. Size a is 0 or more, and can be freely changed.

For example, upon reproducing file 11, as shown in FIG. 8, the recording/reproduction control module 31 issues an instruction to read data for an area of a size a/2 before a target file, to read data for an area of the target file, and to read data for an area of size a/2 after the target file. In response to this instruction, the optical disc drive unit 6 reads data for the area of size a/2 before the target file, data for the area of the target file, and data for the area of size a/2 after the target file.

Then, the recording/reproduction control module 31 can reproduce not only file 11 but also all of files 9, 10, 12, 13, and 14 which are completely included at locations corresponding to the recording area of file 11, and can expand and store them in a cache or the like. As a result, when the user wants to reproduce files 9, 10, 12, 13, and 14 which are deeply related to file 11, the recording/reproduction control module 31 can reproduce files 9, 10, 12, 13, and 14 stored in the cache without issuing an instruction to read data from the storages.

The case has been explained wherein data are read from not only an area of a target file but also from areas of size a/2 before and after the area of the target file. For example, as shown in FIG. 2, when files are allocated at locations closer to a head position of a recorded file area like files 3 and 5, the recording/reproduction control module 31 issues an instruction to read data from an area of a target file, and an area of a size a after the area of the target file. That is, the recording/reproduction control module 31 issues an instruction to read data from an area of a file size of the target file + size a. In response to this instruction, the optical disc drive unit 6 reads data from the area of the target file and the area of size a after the area of the target file.

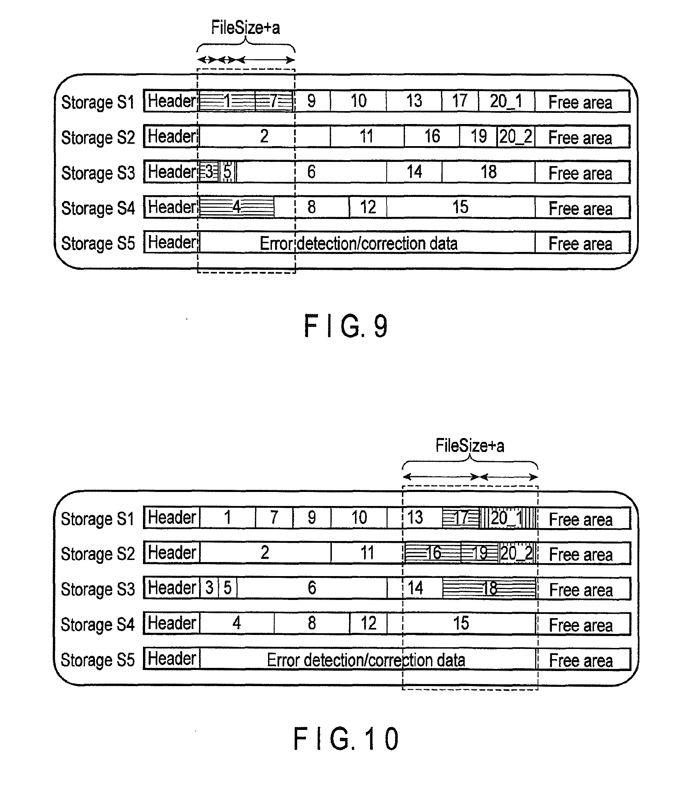

For example, when file 5 is to be reproduced, the recording/reproduction control module 31 issues an instruction to read data from an area of file 5 and the area of size a divided before and after the area of file 5, as shown in FIG. 9. That is, the recording/reproduction control module 31 issues an instruction to read data from an area of the file size of file 5 + size a. In response to this instruction, the optical disc drive unit 6 reads data from the area of file 5 and the area of size a divided before and after the area of file 5.

In this way, the recording/reproduction control module 31 can reproduce not only file 5 but also files 1, 3, 4, and 7, and can expand and store them in a cache or the like. As a result, when the user wants to reproduce files 1, 3, 4, and 7, which are deeply related to file 5, the recording/reproduction control module 31 can reproduce files 1, 3, 4, and 7 stored in the cache without issuing an instruction to read data from the storages. For example, by extending size a, more files such as file 2 can be preliminarily expanded and held on a cache or the like.

For example, when file 20 is to be reproduced, the recording/reproduction control module 31 issues an instruction to read data from an area of file 20_1 (and file 20_2) and an area of size a before the area of file 20_1, as shown in FIG. 10. That is, the recording/reproduction control module 31 issues an instruction to read data from an area of a file size of file 20_1 + size a. In response to this instruction, the optical disc drive unit 6 reads data from the area of file 20_1 and the area of size a before the area of file 20_1.

In this way, the recording/reproduction control module 31 can reproduce not only file 20_1 (and file 20_2) but also files 16, 17, 18, and 19 and can expand and store them in a cache or the like. As a result, when the user wants to reproduce files 16, 17, 18, and 19, which are deeply related to file 20_1 (and file 20_2), the recording/reproduction control module 31 can reproduce files 16, 17, 18, and 19 stored in the cache without issuing an instruction to read data from the storages. For example, by extending size a, more files such as file 14 can be preliminarily expanded and held in a cache or the like.

In this case, size a will be supplemented below. For example, the recording/reproduction control module 31 determines size a based on a size of a target file. For example, the recording/reproduction control module 31 reduces size a as the size of the target file becomes larger. When the size of the target file is large, it is premised that data are read from a relatively large area of each storage. For this reason, even when size a is small, many files other than the target file are more likely to be read. Hence, under this concept, size a is reduced.

Alternatively, the recording/reproduction control module 31 may increase size a as the size of the target file becomes larger. When the size of the target file is large, a read time of the target file is long. For this reason, even when size a is increased slightly, the total read time of the target file and size a is becomes longer than the read time of only the target file at a slight ratio. Therefore, under this concept, size a is increased.

This embodiment will be summarized below.

The file processing module 32 of the file processing apparatus 100 determines the depths of relations (heights of relevancies) of a plurality of files to be processed. For example, deeply related files will be defined as files having predetermined relevancies. The recording/reproduction control module 31 issues an instruction to record deeply related files at corresponding locations of the plurality of storages. In response to this instruction, the optical disc drive unit 6 records the deeply related files at the corresponding locations of the plurality of storages.

For example, the recording/reproduction control module 31 issues an instruction to record a first file (for example, file 11 shown in FIG. 7) of first and second files having predetermined relevancies in a first area of storage S2 of the optical disc drive unit 6, to record the second file (for example, file 12 shown in FIG. 7) in a second area of storage S4 at a location corresponding to the first area, and to sequentially record remaining files in free areas of the plurality of storages. In response to this instruction, the optical disc drive unit 6 records the first file (for example, file 11) in the first area of storage S2, records the second file (for example, file 12) in the second area of storage S4 at a location corresponding to the first area, and records remaining files in free areas of the storages as needed.

In response to a reproduction request of the first file from the user, the recording/reproduction control module 31 issues an instruction to the optical disc drive unit 6 to read the first area where the first file is recorded. The optical disc drive unit 6 reads data from locations corresponding to the first area of the respective storages based on the read instruction of the first area of storage S2. That is, as shown in, for example, FIG. 7, the optical disc drive unit 6 reads data from areas of the respective storages corresponding to the first area where the first file (for example, file 11 shown in FIG. 7) is recorded. The optical disc drive unit 6 transmits the read data to the recording/reproduction control module 31. The recording/reproduction control module 31 reproduces the first file included in the read data. Also, the recording/reproduction control module 31 reproduces and expands the second file, and stores it in the memory 5 (furthermore, the recording/reproduction control module 31 reproduces and expands other files included in the read data and stores them in the memory 5).

Upon reception of a reproduction request of the second file from the user, the recording/reproduction control module 31 reproduces the second file stored in the memory 5.

Alternatively, in response to a reproduction request of the first file from the user, the recording/reproduction control module 31 issues an instruction to the optical disc drive unit 6 to read a third area (first area + size a) which includes the first area where the first file is recorded and is larger than the first area by a predetermined size. The optical disc drive unit 6 reads data from locations corresponding to the third area of the respective storages based on the read instruction of the third area of storage S2. The optical disc drive unit 6 transmits the read data to the recording/reproduction control module 31. The recording/reproduction control module 31 reproduces the first file included in the read data. Also, the recording/reproduction control module 31 reproduces and expands the second file, and stores it in the memory 5 (furthermore, the recording/reproduction control module 31 reproduces and expands other files included in the read data and stores them in the memory 5).

Upon reception of a reproduction request of the second file from the user, the recording/reproduction control module 31 reproduces the second file stored in the memory 5.

According to this embodiment, files deeply related to a reproduction target file can be efficiently reproduced without imposing any influence on a reproduction performance.

By expanding deeply related files in a cache or the like, when the user wants to reproduce these files, these files can be read and reproduced from the cache without reading them out from the storages. Since only the deeply related files are expanded in a cache or the like, the cache size or the like can be prevented from being wasted.

## Claims

1. A file processing apparatus **characterized by** comprising:
a determiner (32) configured to determine relevancies of a plurality of files; and
a recording controller (31) configured to issue an instruction to record a first file of the first file and a second file, each having an associated relevancy, in a first area of a first storage of a storage unit configured to
substantially simultaneously read data from corresponding locations of a plurality of storages,
record the second file in a second area of a second storage at a location corresponding to the first area, and
record remaining files in free areas of the plurality of storages.

2. The apparatus of Claim 1, **characterized by** further comprising:
a read controller (31) configured to instruct the storage unit to read the first area where the first file is recorded in response to a reproduction request of the first file; and
a reproduction controller (31) configured to receive the first file read from the first area and the second file read from the second area by the storage unit based on a read instruction of the first area, to reproduce the first file, and to store the second file in a memory.

3. The apparatus of Claim 2, **characterized in that** the reproduction controller is configured to reproduce the second file stored in the memory in response to a reproduction request of the second file.

4. The apparatus of one of Claims 2 and 3, **characterized in that** the read controller is configured to instruct the storage unit to read a third area which includes the first area where the first file is recorded and is larger than the first area by a first size in response to a reproduction request of the first file, and
the reproduction controller is configured to receive the first file included in first data read by the storage unit from the third area and second data read by the storage unit from a fourth area which is at a location corresponding to the third area, includes the second area, and is larger than the second area by a second size, to reproduce the first file, and to store the second data in the memory.

5. The apparatus of Claim 4, **characterized in that** the first size is the same as the second size.

6. The apparatus of Claim 4, **characterized in that** the read controller is configured to determine the first size based on a size of the first file.

7. A file processing method **characterized by** comprising:
determining relevancies of a plurality of files; and
issuing an instruction to record a first file of the first file and a second file, each having a relevancy, in a first area of a first storage of a storage unit configured to
substantially simultaneously read data from corresponding locations of a plurality of storages,
record the second file in a second area of a second storage at a location corresponding to the first area, and
record remaining files in free areas of the plurality of storages.
